# FASCICULE DE BREVET EUROPEEN

(11) **EP 1 995 342 B1**
(45) Date de publication et mention de la délivrance du brevet: **25.04.2012**
(21) Numéro de dépôt: 08156622.6
(22) Date de dépôt: 21.05.2008
(51) Int. Cl.: C23C 2/00

(54) **Procédé et un dispositif d'enduction métallique de fibres par voie liquide**
Verfahren und Vorrichtung zur Metallbeschichtung von Fasern im Flüssigverfahren
Method and device for coating fibres with metal in a liquid medium

(30) Priorité: 22.05.2007 FR 0703634
(43) Date de publication de la demande: 26.11.2008
(73) Titulaire: SNECMA, 75015 Paris (FR)
(72) Inventeur: Franchet, Jean Michel, 75018 Paris (FR); Klein, Gilles, 95540 Mery sur Oise (FR); Garnier, Christian, 38320 Eybens (FR); Petitpas, Patrick, 73420 Drumettaz (FR); Frayssines, Pierre Eric, 38600 Fontaine (FR); Dumont, Mikaël, 38000 Grenoble (FR)
(74) Mandataire: David, Daniel

(56) Documents cités:
- EP-A- 0 931 846
- WO-A-2006/111579
- GB-A- 470 491
- GB-A- 964 288
- JP-A- 1 177 346
- JP-A- 53 114 734

## Description

L'invention concerne un procédé et un dispositif d'enduction métallique de fibres par voie liquide.

Dans le domaine de l'aéronautique, notamment, un objectif constant est l'optimisation de la résistance des pièces pour une masse et un encombrement minimaux. C'est ainsi que certaines pièces peuvent désormais comporter un insert en matériau composite à matrice métallique. Un tel matériau composite comporte une matrice d'alliage métallique, par exemple d'alliage de titane Ti, dans laquelle s'étendent des fibres, par exemple des fibres céramiques de carbure de silicium SiC. De telles fibres présentent une résistance en traction bien supérieure à celle du titane (typiquement, 4000 MPa contre 1000 MPa) et une rigidité typiquement trois fois plus élevée. Ce sont donc les fibres qui reprennent les efforts, la matrice d'alliage métallique assurant le transfert de charges entre les fibres, une fonction de liant avec le reste de la pièce, ainsi qu'une fonction de protection et de séparation des fibres, qui ne doivent pas entrer en contact les unes avec les autres. En outre, les fibres céramiques sont résistantes, mais fragiles et doivent nécessairement être protégées par du métal.

Ces matériaux composites peuvent être utilisés dans la fabrication de disques, d'arbres, de corps de vérins, de carters, d'entretoises, comme renforts de pièces monolithiques telles des aubes, etc. Ils peuvent également trouver application dans d'autres domaines où un champ de forces volumiques s'applique à une pièce, par exemple une enveloppe de pression telle un canon ou un réservoir de fluide sous pression.

Afin d'obtenir un tel insert de matériau composite, on forme préalablement des fils dits "fils enduits", comprenant une armature formée d'une fibre de céramique, enduite d'une gaine métallique. Le revêtement de métal donne au fil une plus grande raideur mais une meilleure ténacité, utile pour sa manipulation. La fabrication des fils de matériau composite, ou fils enduits, peut être effectuée de diverses manières, par exemple par dépôt de métal sur la fibre en phase vapeur sous un champ électrique, par électrophorèse à partir de poudre métallique ou encore par enduction des fibres au trempé dans un bain de métal liquide.

Un procédé d'enduction de fibres, au trempé, dans un bain de métal liquide en fusion, est présenté dans le brevet EP 0,931,846, au nom de la Demanderesse. Dans le procédé du brevet EP 0,931,846, le métal liquide en fusion est maintenu en lévitation dans un creuset adapté, de manière à supprimer au moins partiellement le contact avec les parois de ce dernier, à une température appropriée. La lévitation est obtenue grâce à des moyens électromagnétiques entourant le creuset. La fibre de céramique, maintenue tendue par des moyens de préemption, est tirée au travers du bain de métal. La vitesse de passage de la fibre dans le bain métallique est fixée en fonction de l'épaisseur de métal désirée sur la fibre.

Un paramètre influant fortement sur la qualité du revêtement métallique est la hauteur de source. La hauteur de source se définit comme la hauteur instantanée de fibre immergée dans le bain de métal liquide, c'est-à-dire, la hauteur de la boule de métal liquide au travers de laquelle s'étend la fibre. Plus la hauteur de source reste constante au cours du procédé, meilleure est la qualité de l'enduction. Néanmoins, au fur et à mesure de l'enduction, la masse de métal de la boule en lévitation, et donc son volume, diminue, entraînant une réduction de la hauteur de source, à l'endroit où s'étend la fibre. Ainsi, la qualité du revêtement ne sera acceptable que jusqu'à une longueur seuil de fil enduit formé, la poursuite de l'enduction au-delà de cette longueur se traduisant par une enduction d'épaisseur trop faible. Par ailleurs, et en tout état de cause, même en-dessous de cette longueur seuil, le revêtement n'est pas satisfaisant, puisque son épaisseur diminue le long du fil.

Ainsi, pour une épaisseur de métal enduit d'une dizaine de microns, le revêtement doit être interrompu au bout de quelques centaines de mètres de fil enduit; pour une épaisseur de métal enduit d'une cinquantaine de microns, le revêtement doit être interrompu au bout de quelques dizaines de mètres de fil enduit. Un procédé d'enduction métallique ne peut donc être mis en oeuvre de manière industrielle.

Une solution à ce problème est présentée dans le document EP 0,931,846, qui consiste en l'alimentation du bain de fusion par une barre métallique introduite par le fond du creuset, en translation de bas en haut. Ce procédé n'est néanmoins pas tout à fait satisfaisant. En effet, la boule en fusion n'est pas très stable thermiquement en raison de la proximité de la barre et la quantité de masse alimentée par unité de temps n'est pas facile à réguler. Par ailleurs, le dispositif présenté ne peut qu'être réalisé avec une fibre tendue horizontalement, ce qui peut être contraignant.

JP-A-01177346 (KAWASAKI STEEL) décrit un procédé et dispositif d'enduction d'une bande métallique par voie liquide dans lequel la bande est conduite à travers d'un bain de métal liquide en fusion comprenant l'alimentation du bain en métal, en cours de procédé, par une poudre métallique.

L'invention vise à proposer une solution alternative au problème d'alimentation du bain de métal en fusion dans un procédé d'enduction métallique de fibres par voie liquide.

A cet effet, l'invention concerne un procédé d'enduction métallique de fibre par voie liquide, dans lequel une fibre est tirée au travers d'un bain de métal liquide en fusion pour être enduite par ce dernier, le bain de métal liquide étant maintenu dans un creuset du type "à lévitation" qui supprime au moins partiellement le contact entre le métal liquide et le creuset, caractérisé par le fait que le bain est alimenté en métal, en cours de procédé, par une poudre métallique.

Grâce à l'invention, l'alimentation du bain de métal en fusion est simple et efficace. Le bain peut être maintenu à sa masse initiale pendant un temps très long, permettant l'enduction de plusieurs kilomètres de fil enduit. Le procédé de l'invention permet donc l'industrialisation de l'enduction de fils enduits par voie liquide, grâce à une productivité largement accrue.

Selon une forme de réalisation, la poudre métallique est déversée dans le bain par une palette vibrante.

L'utilisation d'une telle palette vibrante permet de piloter de manière très précise le débit de poudre et l'homogénéité de sa répartition. Ainsi, la hauteur de source, c'est-à-dire la longueur de fibre immergée dans le bain, est constante, ce qui permet une enduction de qualité. En particulier, l'enduction de fibres céramiques, qui requière un respect stricte de cette hauteur de source, peut être mise en oeuvre de manière industrielle.

Selon une forme de réalisation, la palette étant alimentée en poudre par un réservoir de poudre, on régule le débit de poudre déversée dans le bain par la hauteur entre le réservoir et la palette et par la fréquence de vibration de la palette.

Le réglage du débit par la hauteur entre le réservoir et la fréquence de la palette permet un réglage très fin de ce débit et garantit donc que la hauteur de source est constante.

Selon une forme de réalisation, l'alimentation en poudre est continue au cours du procédé.

Selon une forme de réalisation, le bain en fusion est alimenté au niveau d'une pluralité de zones d'amenée de poudre.

Selon une forme de réalisation, le bain est alimenté par gravité.

Selon une forme de réalisation, la fibre est une fibre céramique, par exemple une fibre de carbure de silicium.

Selon une forme de réalisation, le métal est un alliage de titane.

L'invention concerne encore un dispositif d'enduction métallique de fibres par voie liquide, pour la mise en oeuvre d'un procédé d'enduction métallique de fibres, par exemple des fibres céramiques, par voie liquide, dans lequel une fibre est tirée au travers d'un bain de métal liquide en fusion, par exemple un alliage de titane, pour être enduite par ce dernier, le bain de métal liquide étant maintenu dans un creuset du type "à lévitation" qui supprime au moins partiellement le contact entre le métal liquide et le creuset, comportant un module d'alimentation en poudre métallique du bain de métal liquide en fusion.

Le dispositif présente les mêmes avantages que le procédé présenté ci-dessus.

Selon une forme de réalisation, le module d'alimentation en poudre comporte au moins un distributeur de poudre comportant une palette vibrante pour déverser la poudre métallique dans le bain.

Selon une forme de réalisation, le distributeur de poudre comporte au moins un réservoir d'alimentation de la palette en poudre.

Selon une forme de réalisation, le distributeur de poudre ménage une pluralité de zones d'amenée de poudre dans le bain en fusion.

Selon une forme de réalisation, le distributeur de poudre comporte un réservoir de poudre et un tube d'alimentation de la palette vibrante, la palette étant agencée pour déverser la poudre dans un tube d'amenée de la poudre par gravité dans le bain de métal.

Selon une forme de réalisation, le module d'alimentation en poudre comporte une pluralité de distributeurs de poudre.

Selon une forme de réalisation, le dispositif comporte un module d'émission de fibre, un module d'enduction de fibre, comportant le creuset, et un module de réception de fibre.

L'invention sera mieux comprise à l'aide de la description suivante de la forme de réalisation préférée du procédé et du dispositif de l'invention, en référence aux planches de dessins annexées, sur lesquelles:
- la figure 1 représente une vue en coupe schématique du creuset du dispositif de l'invention;
- la figure 2 représente une vue de profil schématique du dispositif de l'invention;
- la figure 3 représente une vue de profil schématique du module d'alimentation en poudre du dispositif de l'invention;
- la figure 4 représente une vue de dessus d'une première forme de réalisation de la palette vibrante du module d'alimentation en poudre du dispositif de l'invention;
- la figure 5 représente une vue de dessus d'une deuxième forme de réalisation de la palette vibrante du module d'alimentation en poudre du dispositif de l'invention et
- la figure 6 est un diagramme montrant l'évolution de l'épaisseur de métal déposé sur une fibre en fonction de la vitesse de déplacement de la fibre dans un bain dudit métal liquide en fusion.

L'invention est décrite en relation avec la formation d'un fil enduit comportant une fibre de céramique de carbure de silicium, enrobée d'une gaine d'un alliage de titane. De préférence, et de manière classique, un fil très fin de carbone ou de tungstène s'étend au centre de la fibre, le long de son axe, ce fil de carbone ou tungstène étant enrobé de carbure de silicium, tandis qu'une fine couche de carbone ou pyrocarbone revêt le carbure de silicium et se trouve donc interposée entre la fibre et le métal, pour assurer une fonction de barrière de diffusion, de protection de la fibre contre les effets d'entaille et de tampon lors de la relaxation thermique différentielle qui intervient au moment du refroidissement du métal liquide déposé sur la fibre.

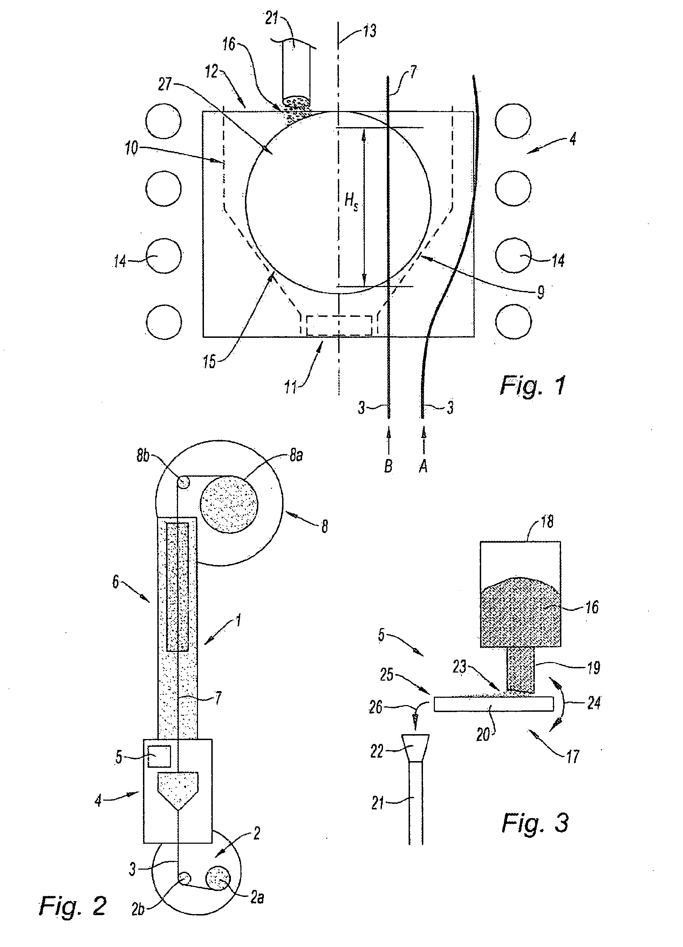

En référence à la figure 2, le dispositif 1 d'enduction métallique de fibres par voie liquide de l'invention comporte un module 2 d'émission, ici de dévidage, d'une fibre céramique 3 de carbure de silicium, un module d'enduction 4 de métal liquide, un module 5 d'alimentation, en poudre métallique, du module d'enduction 4, un module 6 de refroidissement du fil enduit 7 formé et un module 8 de réception, ici de bobinage, du fil enduit 7.

Le module d'émission 2 comporte une bobine 2a sur laquelle est enroulée la fibre céramique 3 qui est dévidée, via une première poulie de renvoi 2b et une deuxième poulie de renvoi 8b, vers une bobine 8a du module de réception 8. La fibre 3 est tendue entre les deux bobines 2a, 8a et s'étend, sensiblement rectilignement, entre les deux poulies de renvoi 2b, 8b. Dans cette portion rectiligne, la fibre 3 traverse le module d'enduction 4.

En référence à la figure 1, le module d'enduction 4 comporte un creuset 9 du type "à lévitation". Un tel creuset 9 comporte des parois 10 s'étendant entre une première ouverture 11, d'entrée de la fibre 3, et une deuxième ouverture 12, de sortie de la fibre 3. Le creuset 9 est globalement à symétrie de révolution autour d'un axe 13, qui est ici parallèle à l'axe selon lequel s'étend la fibre 3 entre les deux bobines de renvoi 2b, 8b. Les parois 10 du creuset 9 comportent au moins une fente longitudinale, non représentée, permettant le passage de la fibre 3 depuis l'extérieur du creuset 9 vers l'intérieur du creuset 9.

Le module d'enduction 4 comporte par ailleurs un inducteur électromagnétique avec une pluralité de spires 14, agencées pour générer un champ magnétique dans le volume du creuset 9 et permettant le maintien en lévitation d'une boule 15 de métal en fusion dans le volume du creuset 9, de manière connue. Le métal est ici un alliage de titane. Lorsque le métal est en lévitation, le contact avec les parois 10 du creuset 9 sont au moins partiellement supprimées.

Sur la figure 1, la fibre céramique 3 est présentée dans deux positions désignées par A et B. Dans la position A, la fibre 3 s'étend de manière non rectiligne pour contourner le creuset 9. La fibre 3 s'étend alors à l'extérieur du volume du creuset 9, entre les parois 10 du creuset 9 et les spires 14 de l'inducteur. Dans cette position, qui est une position de repos ou d'attente, la fibre céramique 3 n'est pas en contact avec le métal en fusion 15.

Dans la position B, la fibre 3 s'étend au sein du volume de métal en fusion 15. La fibre 3 est déplacée de la position A vers la position B au-travers de la fente, présentée ci-dessus, prévue à cet effet dans les parois 10 du creuset. Le déclenchement du mouvement depuis la position A vers la position B peut se faire par n'importe quel moyen approprié, par exemple à l'aide d'une poulie escamotable. Dans la position B, la fibre 3 est dévidée depuis le module d'émission 2 vers le module de réception 8, au-travers de la charge de métal liquide en fusion 15. La fibre 3 est alors enduite par le métal et ressort du bain de métal 15, du côté de l'ouverture de sortie 12 du creuset 9, sous la forme d'un fil enduit 7. Ce dernier est refroidi dans le module de refroidissement 6.

Le dispositif d'enduction 1 comporte par ailleurs, comme annoncé ci-dessus, un module 5 d'alimentation en poudre métallique du bain de métal en fusion 15. Le fait d'alimenter le bain 15 en poudre permet de conserver une hauteur de source, définie plus haut et désignée sur la figure 1 par la hauteur Hs, la plus constante possible. En effet, le débit de poudre est réglé de sorte à compenser la diminution de masse, de la boule de métal en fusion 15, liée à l'enduction de métal sur la fibre 3. Dans la forme de réalisation présentée, la poudre 16 est constituée du même métal que le métal présent dans le bain de métal en fusion, en l'espèce un alliage de titane.

L'apport de poudre 16 permet une alimentation aisée et efficace du bain de métal 15. En particulier, le débit de l'alimentation peut être réglé en fonction de la vitesse d'enduction de la fibre 3. Par ailleurs, la poudre 16 se présentant sous la forme d'une pluralité de petites particules, sa "digestion" par le bain 15 est facilitée. Il faut comprendre, par "digestion" de la poudre 16 par le bain 15, l'action par laquelle le bain intègre la poudre en son sein et la fusionne pour former un ensemble homogène; autrement dit, il s'agit de la transformation des particules solides de métal de la poudre en métal en fusion. La digestion est facilitée par le brassage électromagnétique de la charge de métal 15 en lévitation, qui entraîne la poudre vers l'intérieur de cette charge 15 et facilite sa fusion et l'homogénéisation de l'ensemble.

Il est important, pour que le procédé d'enduction soit de bonne qualité, que la zone du bain dans laquelle la fibre céramique 3 s'étend pour être enduite de métal soit une zone où ne se trouve que du métal en fusion et pas de métal sous forme de poudre. Il faut donc s'assurer que la poudre 16 a correctement été fondue dans la zone en question.

Ainsi, si le débit de poudre 16 est trop important, les particules de métal s'agglomèrent dans le bain liquide, ce qui retarde leur fusion, et peuvent adhérer, sans avoir été fondues, sur la fibre 3, ce qui est néfaste à la qualité du fil enduit 7. En revanche, si le débit de poudre 16 est trop faible, la masse de métal diminue au fur et à mesure de l'enduction de métal sur la fibre 3 et la hauteur de source Hs diminue.

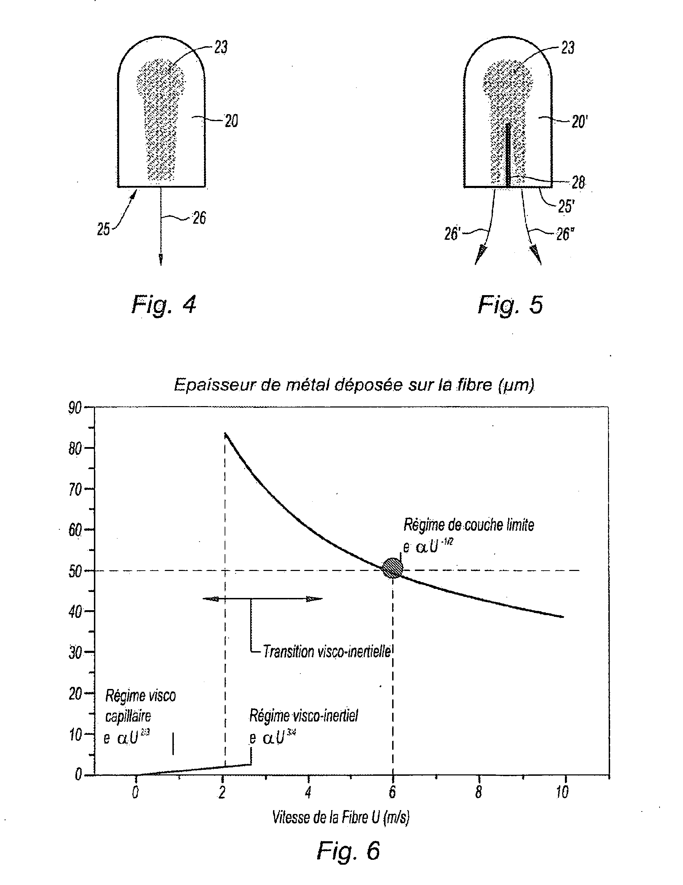

En référence aux figures 3 et 4, le module d'alimentation 5 comporte ici un distributeur de poudre 17, comportant un réservoir de poudre 18, un tube 19 d'alimentation d'une palette vibrante 20 et un tube 21, comportant un entonnoir 22, d'amenée de la poudre 16 par gravité depuis la palette 20 dans le bain de métal 15. Le distributeur de poudre 17 peut être mis sous vide ou sous atmosphère neutre.

La poudre 16, contenue dans le réservoir 18, peut s'écouler librement, dans le tube 19 d'alimentation, sur la palette 20, où elle forme un petit monticule 23. La palette 20 est entraînée en vibration, comme indiqué par la flèche 24, ce qui entraîne la poudre 16 depuis le monticule 23 vers l'extrémité 25 de la palette située au-dessus de l'entonnoir 22. Comme indiqué par la flèche 26, la poudre 16 tombe alors par gravité dans l'entonnoir 22 et donc dans le tube d'alimentation 21, qui la conduit par gravité jusqu'à une zone 27 du bain 15, de réception et d'absorption de la poudre 16, comme on le voit sur la figure 1. Cette zone 27 sera également dénommée par la suite zone 27 d'amenée de la poudre 16 dans le bain 15. La poudre 16 est ingérée par le bain 15 et fusionnée. Le tube 21 d'amenée de la poudre 16 dans le bain en fusion 15 comporte, au moins à son extrémité proche du bain 15, un revêtement formant protection thermique, pour le protéger de la chaleur provenant du bain 15. Cette zone située à proximité du bain 15 peut former (ou comporter) une buse d'alimentation, par exemple de forme tronconique.

Le débit d'alimentation du bain en poudre 16 est réglé notamment grâce à la hauteur entre l'extrémité du tube 19 d'alimentation de la palette 20 par le réservoir 18 et la palette 20, à la fréquence et à l'amplitude de vibration de la palette 20, à l'angle que fait la palette 20 avec l'horizontale et à la granulométrie de la poudre 16. En ce qui concerne la hauteur entre l'extrémité du tube d'alimentation 19 et la palette 20, elle permet de régler la hauteur du monticule 23, ce qui influe sur le débit car, plus le monticule est gros, plus le débit peut être élevé, puisqu'une plus grande masse de métal peut être alimentée au niveau de l'autre extrémité 25 de la palette 20. En ce qui concerne la fréquence et l'amplitude de vibration de la palette 20 et l'angle que fait cette dernière avec l'horizontale, plus ils sont élevés, plus le débit est important. Enfin, concernant la granulométrie de la poudre 16, plus elle est importante, moins il est facile de déplacer la poudre 16 par vibration et donc moins le débit est important.

On note incidemment, en référence à la figure 6, que l'influence de la vitesse de défilement de la fibre céramique 3 sur l'épaisseur de métal déposé sur la fibre 3 n'est pas linéaire. Cette influence ne sera pas détaillée ici, l'homme du métier pouvant faire référence au diagramme de la figure 6, qui présente des courbes bien connues de relation entre l'épaisseur enduite et la vitesse, selon le régime (visco-capillaire, visco-inertiel ou de couche limite) dans lequel on se situe, ledit régime étant déterminé par la vitesse de la fibre 3. De manière générale, on notera que, dans une gamme de vitesses faibles, l'épaisseur enduite augmente avec la vitesse, et dans une gamme de vitesses élevées, l'épaisseur enduite diminue avec la vitesse.

A titre d'exemple, pour une vitesse de défilement de la fibre de 3m/sec, le débit de poudre peut être environ égal à 1g/sec, pour une poudre 16 dont les particules présentent un diamètre d'environ 125µm, ce qui permet l'enduction d'environ 70µm de métal sur la fibre 3. Bien entendu, d'autres valeurs sont envisageables et ces dernières ne sont données qu'à titre d'exemple.

Si, comme sur la figure 1, la fibre 3 défile, non pas au centre, mais sur un côté de la boule de métal en fusion 15, la poudre 16 est de préférence amenée de l'autre côté de la boule 15, l'éloignement entre la zone 27 d'amenée de la poudre 16 et la fibre 3 permettant à la poudre 16 d'avoir plus de temps pour fusionner avant d'entrer en contact avec la fibre 3; un plus grand débit de poudre 16 peut ainsi être envisagé.

Par ailleurs, pour une meilleure homogénéisation du bain de métal en fusion 15, une pluralité de zones 27 d'amenée de poudre dans le bain de métal en fusion 15 peuvent être prévues, ce qui permet de répartir l'apport de poudre 16 sur une plus grande surface de bain liquide 15. A cet effet, le module 5 d'alimentation en poudre 16 peut comporter une pluralité de distributeurs de poudre, par exemple conformes au distributeur 17 décrit ci-dessus. Par ailleurs, le module d'alimentation 5 peut comporter un ou plusieurs distributeurs ménageant chacun une pluralité de zones 27 d'amenée de poudre 16 dans le bain 15.

On a représenté sur la figure 5 une palette vibrante 20' permettant la mise en oeuvre d'un distributeur conforme à cette dernière forme de réalisation. La palette 20' comporte, de même que précédemment, une zone de formation d'un monticule de poudre 23'. La palette 20' comporte par ailleurs, partant de son extrémité 25' d'alimentation d'un entonnoir, une cloison 28 de séparation de l'écoulement de poudre 26 en deux chemins, ce qui permet l'amenée de la poudre 16 dans deux tubes d'alimentation différents, non représentés, comme schématisé par les flèches 26', 26". Ces deux tubes d'alimentation permettent l'alimentation en poudre 16 au niveau de deux zones distinctes 27 d'amenée de poudre 16 dans le bain en fusion 15.

Il va de soi que diverses formes de réalisation de l'invention, non décrites, sont possibles. Par exemple, la fibre 3 peut être dévidée au centre de la boule de métal en fusion 15, la poudre étant amenée en une pluralité de zones 27 situées autour de la fibre 3 et de préférence symétriques autour de cette dernière.

Par ailleurs, le procédé et le dispositif de l'invention ont été présentés en relation avec de la poudre 16 amenée par gravité, mais il va de soi qu'elle pourrait être amenée sous pression.

La fibre 3 ne s'étend pas nécessairement verticalement; elle peut en particulier s'étendre horizontalement. Par ailleurs, la poudre 16 n'est pas nécessairement amenée par l'ouverture de sortie de la fibre 3 mais peut être amenée latéralement par rapport à la fibre 3.

## Revendications

1. Procédé d'enduction métallique de fibre par voie liquide, dans lequel une fibre (3) est tirée au travers d'un bain de métal liquide en fusion (15) pour être enduite par ce dernier, le bain de métal liquide (15) étant maintenu dans un creuset (9) du type "à lévitation" qui supprime au moins partiellement le contact entre le métal liquide et le creuset (9), **caractérisé par le fait que** le bain (15) est alimenté en métal, en cours de procédé, par une poudre métallique (16).

2. Procédé selon la revendication 1, dans lequel la poudre métallique (16) est déversée dans le bain par une palette vibrante (20).

3. Procédé selon la revendication 2 dans lequel, la palette (20) étant alimentée en poudre (16) par un réservoir de poudre (18, 19), on régule le débit de poudre (16) déversée dans le bain (15) par la hauteur entre le réservoir (18, 19) et la palette (20) et par la fréquence de vibration de la palette (20).

4. Procédé selon l'une des revendications 1 à 3, dans lequel l'alimentation en poudre (16) est continue au cours du procédé.

5. Procédé selon l'une des revendications 1 à 4, dans lequel le bain (15) est alimenté au niveau d'une pluralité de zones (27) d'amenée de poudre métallique (16).

6. Procédé selon l'une des revendications 1 à 5, dans lequel le bain (15) est alimenté par gravité.

7. Procédé selon l'une des revendications 1 à 6, dans lequel la fibre (3) est une fibre céramique, par exemple une fibre de carbure de silicium.

8. Procédé selon l'une des revendications 1 à 7, dans lequel le métal est un alliage de titane.

9. Dispositif d'enduction métallique de fibres par voie liquide, pour la mise en oeuvre d'un procédé d'enduction métallique de fibres, par exemple des fibres céramiques, par voie liquide, dans lequel une fibre (3) est tirée au travers d'un bain de métal liquide en fusion (15), par exemple un alliage de titane, pour être enduite par ce dernier, le bain de métal liquide (15) étant maintenu dans un creuset (9) du type "à lévitation" qui supprime au moins partiellement le contact entre le métal liquide et le creuset (9), comportant un module (5) d'alimentation en poudre métallique (16) du bain de métal liquide en fusion (15).

10. Dispositif selon la revendication 9, dans lequel le module (5) d'alimentation en poudre (16) comporte au moins un distributeur de poudre (17) comportant une palette vibrante (20) pour déverser la poudre métallique (16) dans le bain.

11. Dispositif selon la revendication 10, dans lequel le distributeur de poudre (17) comporte au moins un réservoir (18, 19) d'alimentation de la palette (20) en poudre (16).

12. Dispositif selon l'une des revendications 10 ou 11, dans lequel le distributeur de poudre (17) ménage une pluralité de zones (27) d'amenée de poudre dans le bain en fusion (15).

13. Dispositif selon l'une des revendications 10 à 12, dans lequel le distributeur de poudre (18, 19) comporte un réservoir de poudre (18) et un tube (19) d'alimentation de la palette vibrante (20), la palette (20) étant agencée pour déverser la poudre (16) dans un tube (21) d'amenée de la poudre (16) par gravité dans le bain de métal (15).

14. Dispositif selon l'une des revendications 10 à 13, dans lequel le module (5) d'alimentation en poudre (16) comporte une pluralité de distributeurs de poudre.

15. Dispositif selon l'une des revendications 9 à 14, comportant un module (2) d'émission de fibre (3), un module (4) d'enduction de fibre (3), comportant le creuset (9), et un module (8) de réception de fibre (3).

## Claims

1. A process of coating a fiber with a metal by a liquid method, in which a fiber (3) is drawn through a bath of molten liquid metal (15) so as to be coated with the latter, the liquid metal bath (15) being maintained in a crucible (9) of the "levitation" type, which at least partly eliminates contact between the liquid metal and the crucible (9), wherein the bath (15) is fed with metal, during the process, by a metal powder (16).

2. The process as claimed in claim 1, in which the metal powder (16) is poured into the bath via a vibrating plate (20).

3. The process as claimed in claim 2, in which, when the plate (20) is supplied with powder (16) via a powder reservoir (18, 19), the flow rate of powder (16) poured into the bath (15) is regulated by the height between the reservoir (18, 19) and the plate (20) and by the vibration frequency of the plate (20).

4. The process as claimed in one of claims 1 to 3, in which the powder feed (16) is continuous during the process.

5. The process as claimed in one of claims 1 to 4, in which the bath (15) is fed in a plurality of metal powder (16) supply zones (27).

6. The process as claimed in one of claims 1 to 5, in which the bath (15) is fed by gravity.

7. The process as claimed in one of claims 1 to 6, in which the fiber (3) is a ceramic fiber, for example a silicon carbide fiber.

8. The process as claimed in one of claims 1 to 7, in which the metal is a titanium alloy.

9. A device for coating fibers with a metal by a liquid method, for implementing a process of coating fibers with metal, for example ceramic fibers, by a liquid method, in which a fiber (3) is drawn through a bath of molten liquid metal (15), for example a titanium alloy, in order to be coated with the latter, the liquid metal bath (15) being maintained in a crucible (9) of the "levitation" type, which at least partly eliminates contact between the liquid metal and the crucible (9), comprising a feed module (5) for feeding metal powder (16) into the molten liquid metal bath (15).

10. The device as claimed in claim 9, in which the powder feed (16) module (5) comprises at least one powder dispenser (17) having a vibrating plate (20) for pouring the metal powder (16) into the bath.

11. The device as claimed in claim 10, in which the powder dispenser (17) comprises at least one reservoir (18, 19) for feeding the plate (20) with powder (16).

12. The device as claimed in either of claims 10 and 11, in which the powder dispenser (17) feeds a plurality of powder supply zones (27) in the molten bath (15).

13. The device as claimed in one of claims 10 to 12, in which the powder dispenser (18, 19) comprises a powder reservoir (18) and a tube (19) for feeding the vibrating plate (20), the plate (20) being designed to pour the powder (16) into a tube (21) supplying powder (16) by gravity into the metal bath (15).

14. The device as claimed in one of claims 10 to 13, in which the powder (16) feed module (5) comprises a plurality of powder dispensers.

15. The device as claimed in one of claims 9 to 14, comprising a fiber (3) pay-out module (2), a fiber (3) coating module (4), which includes the crucible (9), and a fiber (3) take-up module (8).

## Patentansprüche

1. Verfahren zur Metallbeschichtung von Fasern in flüssiger Form, bei dem eine Faser (3) durch ein Bad von flüssigem geschmolzenem Metall (15) gezogen wird, um von letzterem beschichtet zu werden, wobei das Bad aus Flüssigmetall (15) in einem Tiegel (9) in der Art eines "Levitationstiegels" gehalten wird, der den Kontakt zwischen dem flüssigen Metall und dem Tiegel (9) zumindest teilweise beseitigt, durch die Tatsache **gekennzeichnet**, dass das Bad (15) im Laufe des Verfahrens durch ein Metallpulver (16) mit Metall versorgt wird.

2. Verfahren nach Anspruch 1, bei dem das Metallpulver (16) dem Bad über eine Rüttelpalette (20) zugeführt wird.

3. Verfahren nach Anspruch 2, bei dem man, da die Palette (20) über einen Pulvertank (18, 19) mit Pulver (16) versorgt wird, die Pulvermenge (16), die dem Bad (15) zugeführt wird, durch die Höhe zwischen dem Pulvertank (18, 19) und der Palette (20), sowie durch die Rüttelfrequenz der Palette (20) regelt.

4. Verfahren nach einem der Ansprüche 1 bis 3, bei dem die Zuführung des Pulvers (16) im Laufe des Verfahrens stetig erfolgt.

5. Verfahren nach einem der Ansprüche 1 bis 4, bei dem das Bad (15) durch eine Vielzahl an Bereichen (27) für die Zuführung von Metallpulver (16) versorgt wird.

6. Verfahren nach einem der Ansprüche 1 bis 5, bei dem das Bad (15) über Schwerkraft versorgt wird.

7. Verfahren nach einem der Ansprüche 1 bis 6, bei dem die Faser (3) eine Keramikfaser, wie beispielsweise eine Siliciumkarbid-Faser ist.

8. Verfahren nach einem der Ansprüche 1 bis 7, bei dem das Metall eine Titanlegierung ist.

9. Vorrichtung zur Metallbeschichtung von Fasern in flüssiger Form zur Anwendung eines Verfahrens zur Metallbeschichtung von Fasern, beispielsweise von Keramikfasern, in flüssiger Form, bei dem eine Faser (3) durch ein Bad von flüssigem geschmolzenem Metall, beispielsweise eine Titanlegierung (15) gezogen wird, um von letzterem beschichtet zu werden, wobei das Bad aus Flüssigmetall (15) in einem Tiegel (9) in der Art eines "Levitationstiegels" gehalten wird, der den Kontakt zwischen dem flüssigen Metall und dem Tiegel (9) zumindest teilweise beseitigt, umfassend ein Modul (5) für die Versorgung des Bades aus Flüssigmetall (15) mit einem Metallpulver (16).

10. Vorrichtung nach Anspruch 9, bei der das Modul (5) für die Zuführung des Pulvers (16) zumindest einen Pulververteiler (17) umfasst, der eine Rüttelpalette (20) umfasst, um dem Bad das Metallpulver (16) zuzuführen.

11. Vorrichtung nach Anspruch 10, bei der der Pulververteiler (17) zumindest einen Tank (18, 19) zur Versorgung der Palette (20) mit Pulver (16) umfasst.

12. Vorrichtung nach einem der Ansprüche 10 oder 11, bei der der Pulververteiler (17) eine Vielzahl an Bereichen (27) für die Zuführung von Metallpulver in das Flüssigbad (15) aufweist.

13. Vorrichtung nach einem der Ansprüche 10 bis 12, bei der der Pulververteiler (18, 19) einen Pulvertank (18) und ein Rohr (19) zur Versorgung der Rüttelpalette (20) umfasst, wobei die Palette (20) angeordnet ist, um das Pulver (16) über Schwerkraft in ein Rohr (21) für die Zuführung des Pulvers (16) in das Metallbad (15) abfließen zu lassen.

14. Vorrichtung nach einem der Ansprüche 10 bis 13, bei der das Modul (5) für die Zuführung des Pulvers (16) eine Vielzahl an Pulververteilern umfasst.

15. Vorrichtung nach einem der Ansprüche 9 bis 14, umfassend ein Modul (2) zur Faserausgabe (3), ein Modul (4) zur Faserbeschichtung (3), umfassend den Tiegel (9) und ein Modul (8) zur Faseraufnahme (3).
